# EUROPEAN PATENT APPLICATION

(11) **EP 1 225 057 A1**
(43) Date of publication of application: **24.07.2002**
(21) Application number: 02100024.5
(22) Date of filing: 17.01.2002
(51) Int. Cl.: B41M 5/24, B32B 15/08, B41M 5/26, B44C 1/22, B44C 3/00

(54) **Method for marking a laminated film material**

(30) Priority: 22.01.2001 US 263175 P
(71) Applicant: Novartis AG, 4056 Basel (CH); Novartis-Erfindungen Verwaltungsgesellschaft m.b.H., 1230 Wien (AT)
(72) Inventor: Hawkes, Kimberly, Suchar, GA 30096, Duluth (US); Bailey, Jeffery Scott, GA 30040, Cumming (US); Patterson, Timothy Joy, GA 30011, Auburn (US)
(74) Representative: Becker, Konrad

(57) **Abstract**

The invention relates to a method for marking a laminated film material comprising at least a metal film and a plastic film material affixed to it by means of an adhesive. To ensure that the marking of the film withstands any subsequent process steps, such as sterilization of the packaging, and is visually appealing, it is envisaged that the plastic film material be removed and/or visibly changed in structure by laser.

## Description

The invention relates to a method for marking a laminated film as well as a laminated film for packaging purposes.

The use of laminated films as backing foils for blister packs is well-known in packaging technology. Such laminated films consist of a metallic base, such as aluminium, affixed to a plastic film, which is printed on the upper side and/or the side facing the metal foil, and a plastic film material on the underside that can be welded to a plastic container. Such laminated films are often also marked on the upper side with a variety of information, such as the expiry date, a lot number, and other marks identifying the contents of the pack. If the blister pack is to undergo various other process steps after sealing, such as sterilization by autoclaving, because the contents of the pack are for use in the field of medicine, for example, then it must be guaranteed that the marking on the upper side can withstand such treatment.

A thermal transfer printing process for marking blister packs which are subsequently exposed to sterilization is known, for example, from EP-A-646,471. The result of the marking, however, is not particularly satisfying, because it is too full of contrasts and cannot therefore be optimally coordinated with the packaging design. Furthermore, the process entails the consumption of a large quantity of material. Moreover, using present technology, the marking still has to be carried out on rolled material, i.e. on film which is generally wound around a roller, because it is not possible to a mark containers that are already sealed.

U.S. Patent No. 6,054,090 to *Duis* also teaches a method of printing on a package using a laser, however, it does not teach the present invention. *Duis* teaches a laser method which cuts through the ink layer, or in the alternative, down to foil layer. It does not teach or suggest cutting only to the adhesive layer as does the present invention.

The invention addresses the problem of marking the upper side of a laminated film, especially for blister packs, in such a manner that the marking withstands subsequent process steps such as sterilization of the packaging and produces a result which is optically suitable. Furthermore, the marking process should take place on-line in a packaging plant and be characterized by minimal consumption of materials.

The use of laser enables the upper side of the film material to be furnished with laser inscribed marks which prove resistant to subsequent process steps, such as sterilization in particular, and retain their characteristics.

The present invention is a method for marking a laminated film comprising the steps of: ablating a laminate film, wherein the laminate film has at least one plastic layer adhered to a metal layer with an adhesive layer, the plastic layer and metal layer each having first surfaces which are in contact with the adhesive layer and wherein said laser ablates to depth between the first surface of the plastic layer and the first surface of the metal layer, so that the metal layer is not exposed to the atmosphere.

In particular, the invention is directed to a method of laser inscribing a laminate film, in particular, a laminate film having a plastic film layer, a metal layer and an adhesive layer. The plastic film layer is adhered to the metal layer with the adhesive layer. In the present invention, the intensity of the laser is controlled so that the laser cuts through the plastic layer, but does not ablate to the foil layer. Thus, the depth of the ablation stops in the adhesive layer. The laser is controlled so that the depth of cut is consistent throughout the character or imprint formed.

The inventors have surprisingly found that by ablating down though the plastic to the adhesive layer, but not down to the foil layer results in significant advantages for the package. The foil is the primary boundary between the atmosphere and the sterilized contents of the contact lens package. The inventors have found that ablating down to the foil layer exposes the foil to oxygen, which in turn allows the foil to oxidize. Through oxidation the foil can deteriorate to the point where it no longer acts as a boundary layer. Thus microbes and other contaminants present in the atmosphere can find their way into the package, causing the contact lens to to become contaminated. This result is highly undesirable and can even be dangerous for the consumer.

Ablating only to the adhesive layer avoids these problems. The melted adhesive forms a protective coating over the foil, preventing significant oxidation. Preferably, the depth of cut is uniform throughout the entire character, so none of the metal foil is exposed to the atmosphere. The lack of oxidation helps maintain the foil as a boundary layer, which helps preserve the sterility of the package contents.

If a plastic is selected whose color contrasts sharply with the metallic color, then the film acquires a clearly visible marking which can be integrated much better into the visual identity of the packaging design than is possible with black-and-white printing. Because the marking is not altered when the packaging is treated in an autoclave, there is no impairment of the marking after such treatment. In every case, laser permits the marking of containers that are already filled and sealed, because printing takes place on a non-contact basis with a relatively large distance between the marker and the sealing film, so that a smooth surface is not required.

Further details and advantages of the invention are apparent from the following description and drawings. The drawings show:

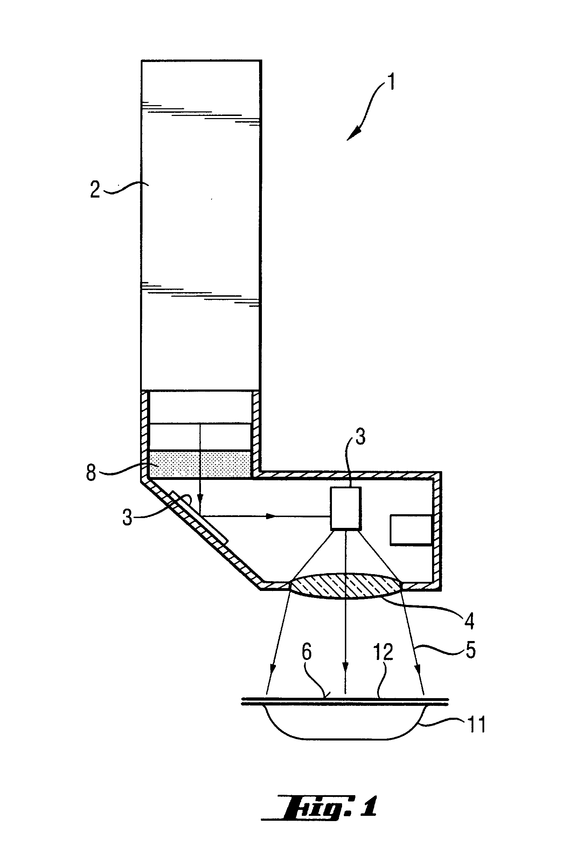

- Fig. 1: a schematic diagram of a laser marking unit and the printing of a film according to the invention;
- Fig. 2: a diagram of the integration of two laser marking units in a packaging plant;
- Fig. 3: a diagram of blister strips arranged alongside each other;
- Fig. 4: a schematic diagram of the control system for several laser marking units.
- Fig. 5: a schematic diagram of a laser inscribed film.
- Fig. 6: a schematic diagram of a second embodiment of a laser inscribed film.

Laser marking unit 1 is designed for the marking of a laminated film, especially for a blister pack. Such a laminated film comprises a metallic substrate, typically of aluminium, affixed to a plastic film which is printed on the upper side and/or on the side facing the metal foil, and a plastic film material on the underside that can be welded to a plastic container. As a result of the laser treatment in the laser marking process, either the upper plastic film is changed thermally in such a manner that a visible color change occurs, or the part of the surface treated with the laser beam is removed to produce the desired lettering. Laser marking unit 1 preferably comprises a laser 2, deflecting mirrors 3 and a flat field lens 4. High frequency-excited sealed-off CO₂ lasers without an external gas supply and having a wavelength of 10.6 µm are preferably used as laser source 2 for the subtractive marking procedure. Generally it can be assumed that the gas fill has a life of about 20000 operating hours. Because the laser is HF-pumped, there is no need for pumping flashlamps, such as are used for example with solid state lasers. For this reason, the costs are confined to the cost of energy consumption. For laser marking by means of a color change in the upper plastic film, Nd:YAG laser is preferably used.

Laser beam 5 is expediently deflected by two rotating galvanometer mirrors 3. These operate in a closed loop with active stabilization of temperature. Because the mirrors 3 have only a very low mass which is moved, a high deflection rate and accurate path precision are possible. After deflection, the beam 5 is focused through a flat field lens 4 onto the operating level 6. Overall, as a result of this calibrated lens and mirror system 3,4, the focus point of the laser 2 is moved in the operating plane 6. The flat field lens 4 preferably has a focal length of 200 mm, providing a sufficiently large working distance. A distortion of the laser beam 5 is excluded by virtue of the axial shift arrangement of the rotating galvanometer mirrors 3. The mirrors 3 are controlled by a card located in the computer. Furthermore, an integrated beam expander provides for a small diameter of the focus point with good depth of focus in the TEM₀₀-Mode. A small diameter of the focus point is important for the quality of the marking, especially if a large working field is envisaged. A favourable diameter of the focus point is 320 µm.

Because the writing head of the laser 2, comprising the deflecting mirrors 3 and the flat field lens, is 4.200 mm from the film surface 6 which is to be marked, a screening of the work space is necessary for safety reasons to protect against any interposition during the marking procedure. Owing to the wavelength of the laser 2 which is used, a plexiglass enclosure can be used for this purpose. This offers the advantage that the marking procedure can be inspected. In addition, the design includes an interruption device 8 for the laser beam 5, which is under electronic control and serves to interrupt the laser beam. It is activated when, for example, the protective doors of the enclosure are opened.

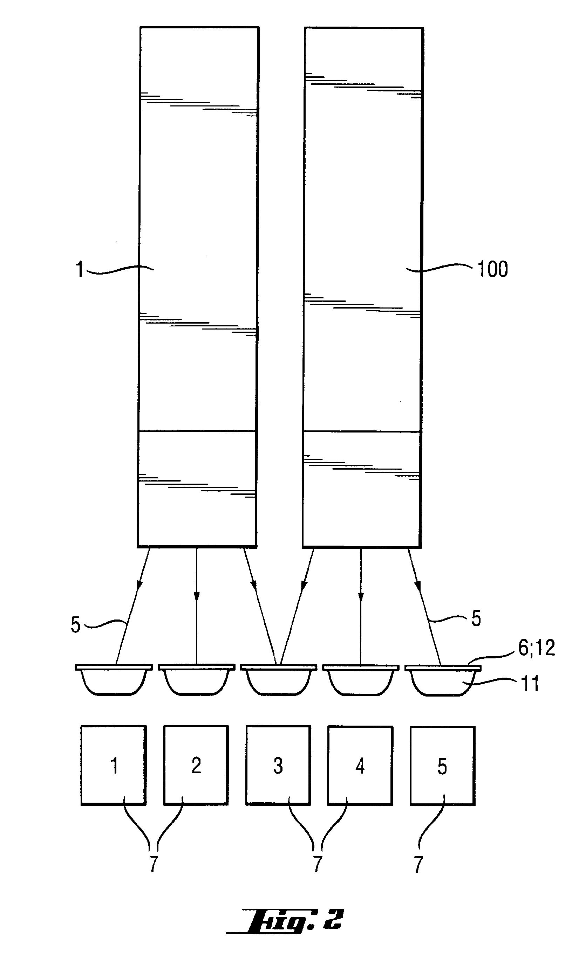

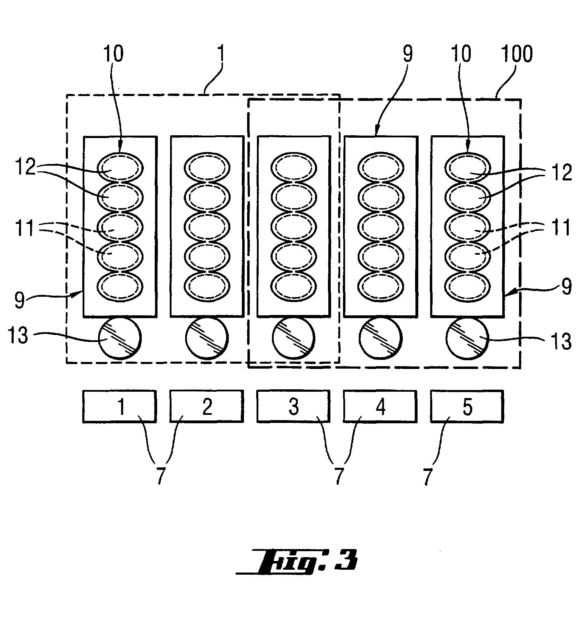

Laser marking unit 1 is preferably integrated into a packaging plant, so that the marking of the film is fully automatic, taking place directly on-line, ideally after the packaging container is sealed. Fig. 2 shows five production lines 7 of a packaging plant especially for contact lenses continually transporting the tool carriers 9 illustrated in Fig. 3, each of which is loaded with a blister strip 10. The blister strips 10 comprise five blister packs 11 arranged one behind the other, which are connected to one another by a film strip 12 corresponding in shape to the outline of the upper side of the blister packs 11, because film strip 12 is welded to the individual blister packs 11 after these have been filled with the object of the packaging, preferably a contact lens. To mark the upper side of film 12 of the blister strips 10, a stopper bar 13 fitted with sensors is envisaged, causing carrier 9 with the blister strips 10 to stop briefly so that they can be marked in a firm marking position by laser 2. Because the deflection of the laser beam 5 is not sufficient for the five lines 7 envisaged in the preferred embodiment and a shifting of laser marking unit 1 would be too complicated, it is intended that two laser marking units 1 and 100 should advantageously be integrated into the packaging plant wherein unit 1 provides marking for lines 1, 2 and 3 and unit 100 for lines 3, 4 and 5.

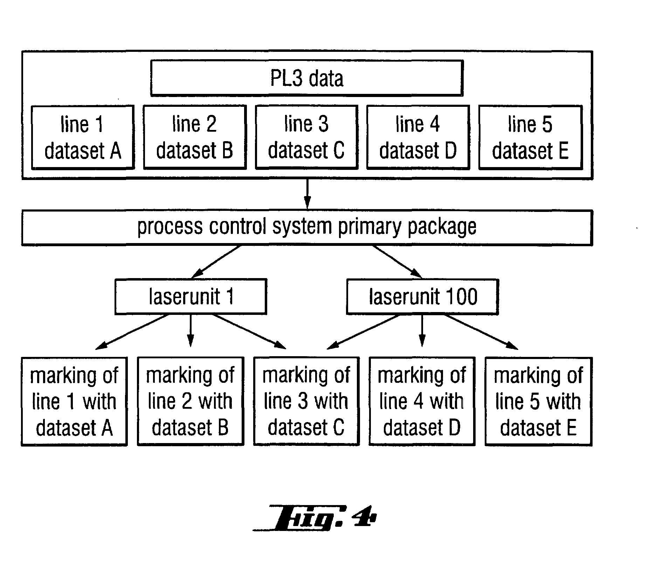

As shown in Fig. 4, the requisite marking data are fed by a process control system to the packaging plant and the laser marking units 1 and 100, the datasets possibly being different for each line 7. Within a single line 7, the dataset remains the same until new datasets are transmitted by the process control system. The marking of line 3 is carried out by the laser unit 1 or 100 which is the first to become free.

The waste which occurs during the marking procedure is advantageously discharged by an exhaust air system which is not described in further detail here.

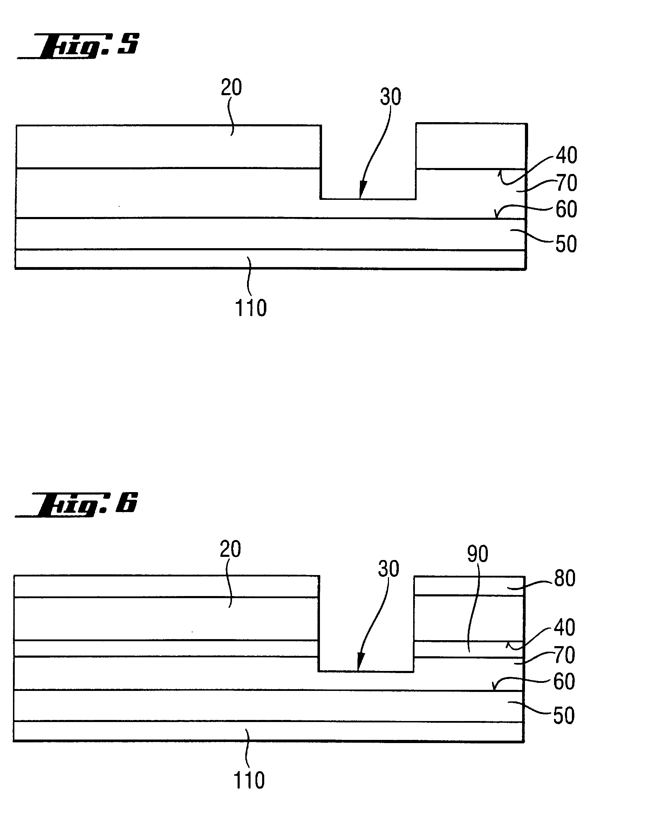

Figures 5 and 6 show graphical representations of the laminate film, with a laser ablation down to the depth of the adhesive layer. The laser creates a cavity that has bottom point 30 somewhere between first surface 40 of the plastic film 20 and first surface 60 of metal foil 50, in adhesive layer 70. Fig. 6 shows optional ink layers 80 and 90. Foil layer 50 may also have a second plastic layer 110 attached to the side opposite plastic layer 20.

The marking results obtained using a CO₂-laser show that the marking of the film is characterized by a very high quality of lettering and resistance. The text is clearly legible and is distinguished by a high degree of resolution. Overall, the marking is of pleasing appearance and matches the packaging design well. Because the process is carried out on a non-contact basis with a relatively large distance between marker and sealing film, containers that are already filled and sealed can be marked without any problem in respect of clarity and resolution of the lettering. Moreover, the integration of a marking unit within a packaging plant has the advantage that the production process can be substantially more flexible. In addition, it has been shown that, after sterilization, the marking remains clearly legible and is not subject to changes.

## Claims

1. A method for marking a laminated film comprising the steps of:
ablating a laminate film;
wherein the laminate film has at least one plastic layer, adhered to a metal layer with an adhesive layer, the plastic layer and metal layer each having first surfaces which are in contact with the adhesive layer; and
wherein said laser ablates to depth between the first surface of the plastic layer and the first surface of the metal layer, so that the metal layer is not exposed to the atmosphere.

2. The method of claim 1 wherein the plastic film has pigments which change their colour on laser treatment.

3. The method of claim 1 wherein the first surface of the plastic layer has text printed thereon.

4. The method of claim 1 wherein the plastic layer has a second layer on the side opposite the first surface, and said second layer has printed text thereon.

5. The method of claim 1, wherein the ablation forms a character.

6. The method of claim 5, wherein the depth of the ablation is continuous for the entire character.

7. The method of claim 3 wherein the printed text is printed with pigments that change color on laser treatment.

8. The method of claim 1 wherein the film which forms the backing foil of a blister pack is firmly welded with the blister pack .

9. The method of claim 8 wherein several blister packs are covered by a film strip and form a blister strip.

10. The method of claim 9 comprising five blister packs forming a blister strip.

11. The method of claim 10 wherein the laminated film is marked by laser after welding to the blister pack.

12. The method of claim 10 comprising the on-line welding of film to the blister pack and marking of film in a packaging plant.

13. The method of claim 1 comprising the use of a CO₂-laser as a laser.

14. The method of claim 1 comprising the use of a Nd:YAG laser.

15. The method of claim 13 comprising a CO₂-laser with the wavelength 10.6 µm and the focus point of the laser beam with a diameter of 1000-100 µm, and preferably of 320 µm.

16. The method of claim 10 comprising a stopper bar for the blister packs.

17. The method of claim 8 wherein the blister packs are transported within a packaging plant in at least two lines alongside one other.

18. The method of claim 12 comprising two or more lasers for the marking of blister packs in lines.

19. The method of claim 8 comprising an ophthalmic lens, especially a contact lens in blister packs.

20. A laminated film made by the method of claim 1.

21. A laminated film of claim 20 comprising ablated marking of 1000-100 µm in width.

22. A laminated film of claim 20 comprising a plastic film and having first and second sides, and having printing on the first or second sides.

23. A laminated film of claim 20 comprising a plastic film material having pigments.

24. A laminated film of claim 20 comprising pigments which change their color in the field of the laser-inscribed marking.
